(19) Europäisches Patentamt
European Patent Office
Office européen des brevets

(11) **EP 2 549 697 A1**

(12) **EUROPEAN PATENT APPLICATION**

(43) Date of publication:
**23.01.2013 Bulletin 2013/04**

(51) Int Cl.:
***H04L 12/70*** *(2013.01)* ***H04L 12/24*** *(2006.01)*

(21) Application number: **11305953.9**

(22) Date of filing: **22.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent
75007 Paris (FR)**

(72) Inventors:
• **Djarallah, Nabir Bachir
91700 Sainte Genevieve des Bois (FR)**
• **Douville, Richard
91310 Longpont sur Orge (FR)**

(74) Representative: **Wetzel, Emmanuelle et al
Alcatel-Lucent Deutschland AG
Intellectual Property & Corporate Standards
Lorenzstrasse 10
70435 Stuttgart (DE)**

(54) **Method of network path computation**

(57) Method of network path computation comprising the steps of receiving from a client a path reservation request comprising a plurality of constraints, distributing the constraints proportionally and, based on the distribution of the constraints, computing a network path satisfying the path reservation request.

FIG 1

**Description**

**Field of the Invention**

The invention relates to a method of network path computation.

**Background**

This section introduces aspects that may be helpful in facilitating a better understanding of the invention. Accordingly, the statements of this section are to be read in this light and are not to be understood as admissions about what is in the prior art or what is not in the prior art.

The IETF has specified the Path Computation Element (PCE) framework via the RFC4655 and its Path Computation Element Communication Protocol (PCEP) in RFC5440. The IETF's PCE working group defines the PCE as "an entity (component, application or network node) that is capable of computing a network path or route based on a network graph add applying computational constraints". Several functional components are assigned the PCE: performs path computation (intra/Inter-AS optimal constrained paths), preserves confidentiality, avoids abstraction/ aggregation issues, off-loads computational complexity, etc. The PCE framework may compute the end-to-end path itself if enough topology and information is available. Alternately, it may opt to compute a part of the complete path and request another PCE to compute another part. A PCE is able to compute a path, subject to one or multiple constraints using an appropriate algorithm to perform this task.

Within this architecture, each PCE has a detailed view of its responsibility domain (e.g. area or AS) in term of topology and resource availability. To compute inter-domain paths, PCEs might use the Backward Recursive PCE-based Computation (BRPC) described by the IETF's RFC5441 and communicating with the PCEP.

The BRPC document considers an optimal inter-domain constrained path as the shortest path satisfying the set of requested constraints. With this definition of an optimal inter-domain path, the PCEs will compute the shortest path taking in account the boundaries of the request's constraints. Furthermore, paths requested between the same couple of source-destination will be the same regardless that constraints are relaxed or not. To illustrate this, let's take a example of two intra-domain client requests R1 and R2 where:

- R1 requests a path from s to d that obeys to two additive constraints $c_1$ and $c_2$;
- R2 requests a path from s to d that obeys to two additive constraints $c_1'$ and $c_2'$;
- $c_1' >> c_1$ and $c_2' >> c_2$;
- PCE1 is responsible of all computations;

In the context of intra-domain QoS routing (without the PCE architecture), a solution is proposed in the patent [US007408881 B2]. This solution consists on the computation of all paths satisfying a given differential delay. Once the paths are computed, they are organized in order of increasing delay. A particular sub set of paths is selected to verify it with the second QoS metric which is the Bandwidth. Otherwise, the process is repeated for one or more additional iteration by application of a sliding-window function to the arranged paths in order of increasing delay, until a different candidate path satisfying the differential delay constraint is determined to support the bandwidth requirement of the requests.

This solution is not good enough as it :

- Handles one QoS metric at a given time (disjoint optimization);

- Scalability issues : all possible path that respect delay constraints are computed, arranged in order of increasing delay and saved (increases the space and the run time complexity);

- One or several passes are needed to find the set of solutions;

In the context of inter-domain QoS routing (with the PCE architecture), a solution is proposed in the patent [US7599349B2]. The solution proposed by this invention tries to compute a virtual shortest path tree (which does not meet what we seek to solve). The Virtual Shortest Path Tree (VSPT) is computed within each domain of the domain-chain toward the destination. This mechanism could be done in recursive manner also. The major problem with this solution is that computes the optimal shortest path between S and T. Other problem concerns the number and the type of constraints which is not determined by the invention. In the case of more than one metric the intermediate results are not a simple VSPTs and the concatenation with the next domain graph is quite different. In this case, finding optimal paths satisfying R1 and R2, according to the definition before, means that the PCE1 will return the same shortest path between the same couple of source-destination (both requests). In terms of charging, usually a client pays for a type of service and/or a Quality of Service (QoS) which is translated into different network resources according to needed QoS. But, finding the shortest optimal path, all time, means that the clients will be served with the requested services (if resources are available) and with best quality, even if constraints are more relaxed or not. With the growing demand for inter-domain high performance services, the proposed solution can not be the key solution to follow the business model of service providers. For example, in traffic engineering systems such as Multiprotocol Label Switching (MPLS) and Generalized Multiprotocol Label Switching (GMPLS) networks, when a Label Switched Path is requested, ideally is to compute and return the path that is closest to the request without violating constraints.

The discussed problem remains valid in the inter-domain context with multiple QoS metrics assigned to network links and elements. Moreover, finding the suitable path in multi-domain context is more difficult, because the PCE's visibility is limited to their domain, but the request is global.

**Summary**

The present invention was made in view of the prior art described above, and the object of some embodiments is to provide a practical method capable of network path computation.

According to an embodiment there is provided a method of network path computation comprising the steps of receiving from a client a path reservation request comprising a plurality of constraints, distributing the constraints proportionally on a sub-set of resources units (e.g. domain, autonomous system, carrier, area, router, etc.) and, based on the distribution of the constraints, computing a network path satisfying the path reservation request. Constraints are additive and other types of constraints should be transformed into additive, in order to be handled by the invention.

The invention is a mechanism to distribute proportionally constraints of a client's request in order to satisfy the end-to-end request. As mentioned before, our objective is to computes paths that are closer as possible to constraints and without violating those constraints.

New fields.

The basic idea consists in the introduction of new field in the PCEP requests. This field regroups the means of the additive QoS metrics handled by domains (i.e. mean delay to cross the domain, mean cumulative jitter when a domain is crossed, etc). The added field gives to crossed domains an idea about additive QoS metrics of each domain. These fields can be replaced by policies delivered by a Policy Manager (PM) or another dispositive capable to communicate with the network element; responsible of the path computation.

In the case of using a new field, it can takes the format :

- Means of Metrics (MoM)=, {Published Mean Delay (PMD), Published Mean Cumulative Jitter(PMCJ), etc}, represents a set of information concerns QoS within domains. The MoM is transmitted in PCEP Request messages.

PMD: published mean delay to cross a domain. This mean delay given by a domain represents the mean delay that takes a data packet from boundary entry node to boundary exit node. This published delay depends on the <u>Mean Delay</u> (MD), <u>Min Delay</u> (MinD) and the <u>charge of the network domain</u> $\alpha$. For the published mean delay we propose :

$$PMD = MD + (MinD * \alpha)$$

PMCJ: published mean cumulative jitter. This jitter represents the cumulative jitter that a domain can caused when a data packet cross the domain from an entry node to another exit node. The published mean cumulative jitter depends on the <u>Mean Cumulative Jitter</u> (MCJ), <u>Min Cumulative Jitter</u> (MinCJ) and the <u>charge of the network domain</u> $\alpha$. For the published mean cumulative jitter we propose :

$$PMCJ = MCJ + (MinCJ * \alpha)$$

Generally, other published additive QoS metrics can be defined as the same manner as with PMD and PMCJ. Note that non-additive QoS metrics (i.e. multiplicative QoS metrics) can be transformed to additive metrics.

The proposed MoM field gives to participant domains the possibility to get an idea of what the others can provide in terms of QoS. Once a domain has all the information that concerns the other domain, it can proceed to compute paths within its domain. This initial request sent by the Path Computation Client will be transformed in order to take in account the capability of all participant domains. We propose a formula to transform the initial request with the different additives constraints. We suppose that we have N crossed domains, where i=1...N, toward the destination.

**INPUT**:

Local information:

- $MM_i$ : Mean Additive QoS Metric J, where i=1,...,m
- $MinM_j$ : Min Additive QoS Metric J, where j=1,...,m
- $\alpha$ : local network charge, where $1>=\alpha>=0$

External information:

- Request<source node S, destination node T, List of additive constraints $L\_AC\{AC_1,...,AC_m\}$, List of non additive constraints $L\_C\{C_1,...,C_M\}$
- $L\_PMM_{j,d}$ : a list of published Mean Metrics of each domain participant, where j=1,...,m is the type of metric (i.e. PMD, PMCJ, etc), and d=1,...,D is the associated domain.

**PROBLEM**:

Given an e2e client's request, adjust constraints to obtain the new boundaries of constraints within the local domain.

OUTPUT:

List of new local additive constraints $NL\_AC\{NAC_1,...,NAC_m\}$request, such that new constraints respect the old ones

**ALGORITHM**:

    Create NL_AC={};

    For each additive metric j =1,..., m do

        Compute e2eMM_i : the sum of all L_PMM_{j,d}; /*where d = 1,...,D domains*/
        Compute Δ_j = MinM_j * α ;     /*where Δ_j is the impact of the network charge on
    the additive metric j*/
        NAC_j = AC_j * (MM_j / e2eMM_j) + Δ_j; /*new local constraint*/
        Add NAC_j to NL_AC;
    End For

    Return  NL_AC;

**Extensions**

The invention can be included in BRPC in order to dynamically fill the list $L\_PMM_{j,d}$ where j = 1,..., m number od additive QoS metrics and d = 1,..., D number of domain in the domain chain. Adding the new field to PCEP which is used by BRPC allow domains during the forward phase, when the request travels from the source domain to the destination domain, to construct progressively the list $L\_PMM_{j,d}$. The invention could be applied to more complex procedure (like the one of 804323 EP) which would select several PCEs in order to explore different inter-domain paths.

**Brief Description of the Figures**

Some embodiments of apparatus and/or methods in accordance with embodiments of the present invention are now described, by way of example only, and with reference to the accompanying drawings, in which:

Figure 1 schematically illustrates an example of two interconnected domains.

Figure 2 schematically illustrates a scenario using a forward algorithm that does not support the proposed formula.

Figure 3 schematically illustrates the scenario of Figure 2, now using the proposed formula.

Figure 4 schematically illustrates the scenario of Figure 3 wherein the charge of the networks is modified.

**Description of the Embodiments**

Hereinafter, the best mode for carrying out a method according to an embodiment is described in detail.

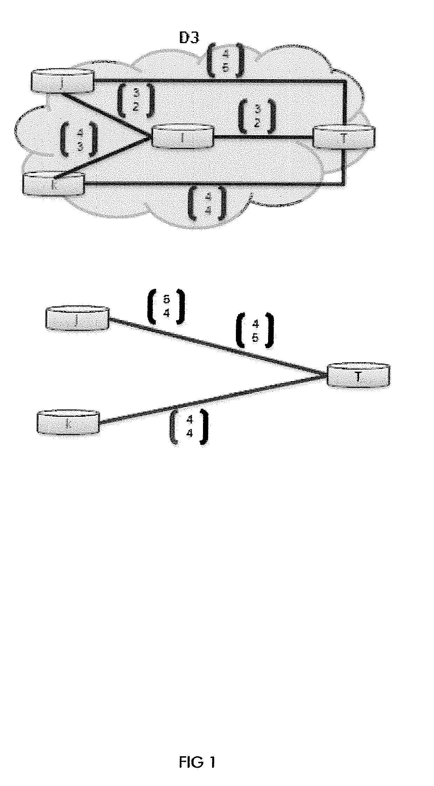

To illustrate the method, we present an example of two domains interconnected as depicted in figure 1. With this inter-domain topology we try to establish a path from node S to node T. To overcome this, we need to compute path from the couple of node <S,T>. In addition, we need that eventual path(s) respects the constraints C1=13 and C2=13 (two additive metrics).

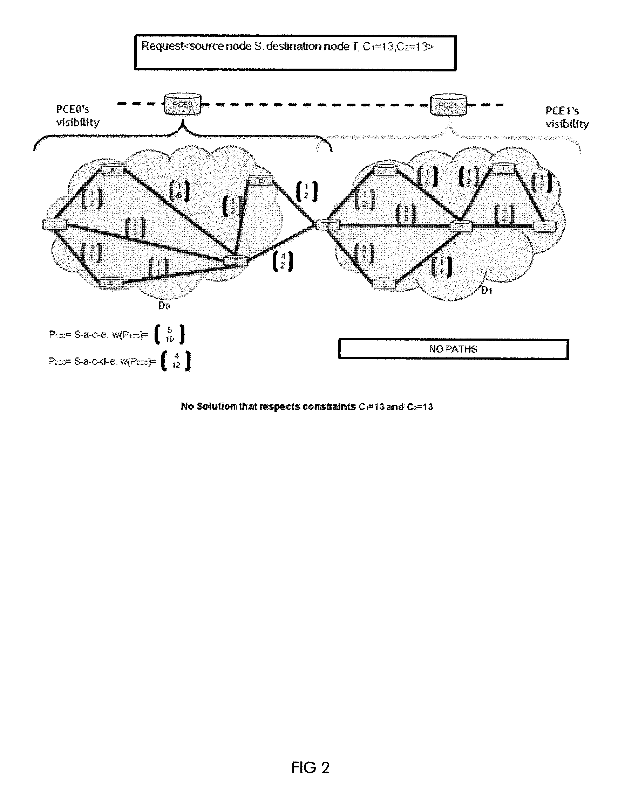

In figure 2 (scenario 1), we use a forward algorithm that does not support the proposed formula. $PCE_0$ of domain $D_0$ receives a request R<S,T,C1=13,C2=13>, computes possible paths toward its exit nodes that joint domain D1 (node e) and then sends the result to next domain $D_1$. $PCE_1$ responsible of domain D1, receives the computed paths $P_{1,D0}$= S-a-c-e, w($P_{1,D0}$)= <6, 10> and $P_{2,D0}$= S-a-c-d-e, w($P_{2,D0}$)= <4,12>. PCE1 try to find a path to node T taking into account $P_{1,D0}$ and $P_{2,D0}$, but **without success**. This means that, within $D_1$, there are no path from e to T that respect the reminder budget of the request <13-6=7, 13-10=3> (when $P_{1,D0}$ is used) or <13-4=9,13-12=1> (when $P_{2,D0}$ is used). So, no end-to-end solution from node S to node T that respects C1=13 and C2=13.

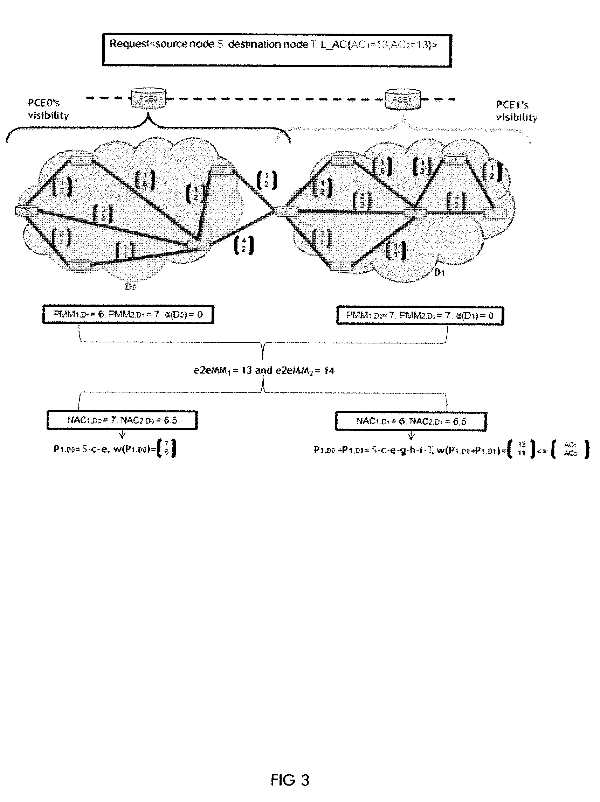

The same example with the same request is used shown in figure 3 (scenario 2), but this time we use the formula proposed before. In this scenario, we suppose that the network charge is null for both domains Do and $D_1$. Each domain recovers the published information that concerns QoS metrics of the other domain in order to compute $e2eMM_1$ and $e2eMM_1$. Once the two e2e Mean Metrics are computed we can apply $NAC_j = C_j * (MM_j / e2eMM_j) + \Delta_j$ j=1,2.

Domain 0, metric 1 and metric 2 :

$NAC_1$ = 13 * (7 / 13) + 0 /* because a = 0 */
$NAC_1$ = 7

$NAC_2$ = 13 * (7 / 14) + 0 /* because $\alpha$ = 0 */
$NAC_2$= 6.5

Domain 1, metric 1 and metric 2 :

$NAC_1$ = 13 * (6 / 13) + 0 /* because a = 0 */
$NAC_1$ = 6

$NAC_2$ = 13 * (7 / 14) + 0 /* because a = 0 */
$NAC_2$= 6.5

Once new local constraints are computed, $PCE_0$ can start the computation of its possible paths that are able to reach the next domain $D_1$ using the new $NAC_1$ = 7 and $NAC_2$ = 6.5. The founded path is $P_{1,D0}$= S-c-e, w($P_{1,D0}$)= <7, 5>. This path is sent to domain $D_1$ to be attached to potential paths within $D_1$. $PCE_1$ start the computation within its network taking into account the received path $P_{1,D0}$ and the new local constraints $NAC_1$ = 6 and $NAC_2$ = 6.5. Once the computation is finished, $PCE_1$ returns the computed path to the source: $P_{1,D0}$ +$P_{1,D1}$= S-c-e-g-h-i-T, w($P_{1,D0}$ +$P_{1,D1}$)= <13, 11> $\leq$ list of global constraints < C1=13, C2=13 >.

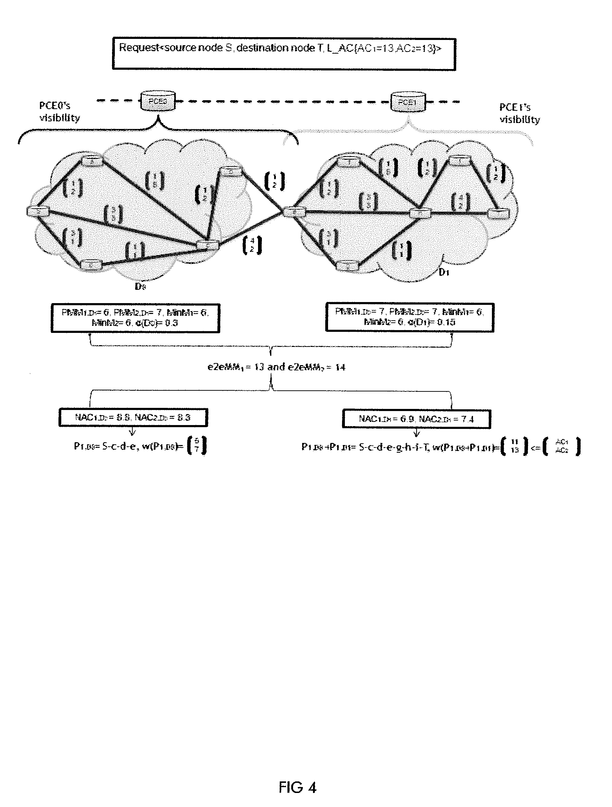

The scenario 3 listed in figure 4 reuses the same example as before with the same request. But, this time we modify the charge of the networks to see if we can find a path from node S to node T. We assigned a charge $\alpha(D_0)$= 0.3 to domain Do and $\alpha(D_0)$= 0.15 to domain $D_1$. The two e2e Mean Metrics are still the same as in the previous scenario. Let compute the new local constraints, using $NAC_j = C_j * (MM_j /e2eMM_j) +\Delta_j=1,2$.

Domain 0, metric 1 and metric 2 :

$NAC_1$ = 13 * (7 / 13) + (6* 0.3) /* because a = 0 */**$NAC_1$ = 8.8**

$NAC_2$ = 13 * (7 / 14) + (6 * 0.3) /* because a = 0 */**$NAC_2$ = 8. 3**

Domain 1, metric 1 and metric 2 :

$NAC_1$ = 13 * (6 / 13) + 0 /* because a = 0 */**$NAC_1$ = 6.9**

$NAC_2$ = 13 * (7 / 14) + 0 /* because a = 0 */**$NAC_2$ = 7.4**

Once new local constraints are computed, $PCE_0$ can start the computation of its possible paths that are able to reach the next domain $D_1$ using the new $NAC_1$ = 8.8 and $NAC_2$ = 8.3. The founded path is $P_{1,DO}$= S-c-d-e, w($P_{1,D0}$) = <5, 7>. This path is sent to domain $D_1$ to be attached to potential paths within $D_1$. $PCE_1$ start the computation within its network taking into account the received path $P_{1,D0}$ and the new local constraints $NAC_1$ = 6.9 and $NAC_2$ = 7.4. Once the computation is finished, $PCE_1$ returns the computed path to the source: $P_{1,D0} +P_{1,D1}$= S-c-d-e-g-h-i-T, w($P_{1,D0} +P_{1,D1}$) = <11, 13> $\leq$ list of global constraints < C1=13, C2=13 >.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description merely illustrates the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method of network path computation comprising the steps of receiving from a client a path reservation request comprising a plurality of constraints, distributing the constraints proportionally and, based on the distribution of the constraints, computing a network path satisfying the path reservation request.

2. Method as in claim 1 wherein the path reservation request conforms to the Path Computation Element Communication Protocol.

3. Method as in claim 1 or 2 wherein the network path crosses a plurality of network domains.

4. Method as in claim 3 wherein at least one of the plurality of network domains is associated with a quality-of-service metric and at least one of the plurality of constraints is based on the quality-of-service metric.

**5.** Method as in claim 4 wherein the quality-of-service metric takes the form of an additive metric.

**6.** Method as in claim 5 comprising calculating means of the quality-of-service metrics and regrouping the means.

**7.** Method as in claim 6 wherein the additive metric comprises a delay to cross the at least one of the plurality of network domains.

**8.** Method as in claim 6 wherein the additive metric comprises a cumulative jitter when the at least one of the plurality of network domains is crossed.

**9.** Method as in any of claims 6, 7, and 8 wherein the means is regrouped by a field of the path reservation request.

**10.** Method as in claim 9 comprising receiving a policy from a policy manager and replacing the field by the policy.

**11.** Method as in any of claims 6 to 10 comprising calculating a sum of the means and a weighted minimum of the quality-of-service metric.

**12.** Method as in claim 11 comprising publishing the sum.

**13.** A program storage device readable by a machine, tangibly embodying a program of instructions executable by the machine to perform a method according to any of claims 1 to 12.

**14.** A computer program product comprising computer-executable instructions for performing a method according to any of claims 1 to 12 when the program is run on a computer.

**15.** A data stream representative of a computer program according to claim 14.

FIG 1

Request<source node S, destination node T, C₁=13,C₂=13>

PCE0's
visibility

PCE1's
visibility

$P_{1cc}$= S-a-c-e, w($P_{1cc}$)= $\begin{pmatrix} 5 \\ 10 \end{pmatrix}$

$P_{2cc}$= S-a-c-d-e, w($P_{2cc}$)= $\begin{pmatrix} 4 \\ 12 \end{pmatrix}$

NO PATHS

No Solution that respects constraints C₁=13 and C₂=13

FIG 2

Request<source node S, destination node T, L_AC{AC₁=13,AC₂=13}>

PCE0's visibility

PCE1's visibility

$\begin{pmatrix} 1 \\ 6 \end{pmatrix}$ $\begin{pmatrix} 1 \\ 2 \end{pmatrix}$ $\begin{pmatrix} 1 \\ 2 \end{pmatrix}$ $\begin{pmatrix} 1 \\ 2 \end{pmatrix}$ $\begin{pmatrix} 1 \\ 6 \end{pmatrix}$ $\begin{pmatrix} 1 \\ 3 \end{pmatrix}$ $\begin{pmatrix} 3 \\ 2 \end{pmatrix}$

$\begin{pmatrix} 3 \\ 3 \end{pmatrix}$ $\begin{pmatrix} 1 \\ 2 \end{pmatrix}$ $\begin{pmatrix} 4 \\ 2 \end{pmatrix}$ $\begin{pmatrix} 3 \\ 2 \end{pmatrix}$ $\begin{pmatrix} 3 \\ 3 \end{pmatrix}$ $\begin{pmatrix} 4 \\ 2 \end{pmatrix}$

$\begin{pmatrix} 1 \\ 1 \end{pmatrix}$ $\begin{pmatrix} 3 \\ 1 \end{pmatrix}$

D₀

D₁

PMM₁,D₀ = 6, PMM₂,D₀ = 7, α(D₀) = 0

PMM₁,D₁ = 7, PMM₂,D₁ = 7, α(D₁) = 0

e2eMM₁ = 13 and e2eMM₂ = 14

NAC₁,D₀ = 7, NAC₂,D₀ = 6.5

NAC₁,D₁ = 6, NAC₂,D₁ = 6.5

$P_{1,D0}= S-c-e, w(P_{1,D0})=\begin{pmatrix} 7 \\ 5 \end{pmatrix}$

$P_{1,D0}+P_{1,D1}= S-c-e-g-h-i-T, w(P_{1,D0}+P_{1,D1})=\begin{pmatrix} 13 \\ 11 \end{pmatrix} <= \begin{pmatrix} AC_1 \\ AC_2 \end{pmatrix}$

FIG 3

Request<source node S, destination node T, L_AC{AC₁=13,AC₂=13}>

PCE0's visibility

PCE1's visibility

PCE0

PCE1

D₀

D₁

PMM1,D₀= 6, PMM2,D₀= 7, MinM1= 6, MinM2= 6, σ(D₀)= 0.3

PMM1,D₁= 7, PMM2,D₁= 7, MinM1= 6, MinM2= 6, σ(D₁)= 0.15

e2eMM₁ = 13 and e2eMM₂ = 14

NAC1,D₀= 8.8, NAC2,D₀= 8.3

NAC1,D₁= 6.9, NAC2,D₁ = 7.4

$P_{1,D0}= S\text{-}c\text{-}d\text{-}e,\ w(P_{1,D0})= \begin{pmatrix} 5 \\ 7 \end{pmatrix}$

$P_{1,D0}+P_{1,D1}= S\text{-}c\text{-}d\text{-}e\text{-}g\text{-}h\text{-}i\text{-}T,\ w(P_{1,D0}+P_{1,D1})= \begin{pmatrix} 11 \\ 13 \end{pmatrix} <= \begin{pmatrix} AC_1 \\ AC_2 \end{pmatrix}$

FIG 4

Europäisches
Patentamt

European
Patent Office

Office européen
des brevets

# EUROPEAN SEARCH REPORT

**Application Number**

EP 11 30 5953

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAVID GRIFFIN ET AL: "Interdomain routing through QoS-class planes [Quality-of-Service-Based Routing Algorithms for Heterogeneous Networks]", IEEE COMMUNICATIONS MAGAZINE, IEEE SERVICE CENTER, PISCATAWAY, US, vol. 44, no. 2, 1 February 2007 (2007-02-01), pages 88-95, XP011168282, ISSN: 0163-6804 * the whole document * ----- | 1-15 | INV. H04L12/56 H04L12/24 |
| X | BOUCADAIR (EDITOR) FRANCE TELECOM R&D M: "QoS-Enhanced Border Gateway Protocol; draft-boucadair-qos-bgp-spec-01.tx", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JC TVC-SITE/- 17/03/2011, INTERNET ENGINEERING TASK FORCE, IETF, no. 1, 1 July 2005 (2005-07-01), XP015041739, ISSN: 0000-0004 * 6.3.2.1. QoS comparison logic * ----- -/-- | 1-15 | **TECHNICAL FIELDS SEARCHED (IPC)** H04L |

The present search report has been drawn up for all claims

| Place of search | Date of completion of the search | Examiner |
|---|---|---|
| Munich | 16 December 2011 | Nold, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 11 30 5953

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DASGUPTA S ET AL: "Path-Computation-Element-Based Architecture for Interdomain MPLS/GMPLS Traffic Engineering: Overview and Performance", IEEE NETWORK, IEEE SERVICE CENTER, NEW YORK, NY, US, vol. 21, no. 4, 1 July 2007 (2007-07-01), pages 38-45, XP011188059, ISSN: 0890-8044, DOI: 10.1109/MNET.2007.386468 * abstract * * figure 1 * * Performance Metric * * page 38, right-hand column, line 5 - line 8 * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 16 December 2011 | Nold, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 007408881 B2
- US 7599349 B2